# EUROPEAN PATENT APPLICATION

(11) **EP 2 236 555 A1**
(43) Date of publication of application: **06.10.2010**
(21) Application number: 10003298.6
(22) Date of filing: 26.03.2010
(51) Int. Cl.: C08L 23/06, C08L 77/00

(54) **Resin fuel-supply component**

(30) Priority: 30.03.2009 JP 2009082104
(71) Applicant: TOKAI RUBBER INDUSTRIES, LTD., Komaki-shi Aichi-ken 485-8550 (JP)
(72) Inventor: Yajima, Takashi, Komaki-shi 485-8550 Aichi-ken (JP); Katayama, Kazutaka, Komaki-shi 485-8550 Aichi-ken (JP)
(74) Representative: Kuhnen & Wacker

(57) **Abstract**

A resin fuel-supply component is provided which has lower fuel permeability and excellent weldability to a resin fuel tank. The resin fuel-supply component is composed of an alloy material which comprises a sea phase, an island phase dispersed in the sea phase and a sea-island compatibilizing layer present between the sea phase and the island phase. The sea phase comprises a higher-acid-modification-ratio high-density polyethylene resin (A), a lower-acid-modification-ratio high-density polyethylene resin (B), and an unmodified high-density polyethylene resin (C). The island phase comprises an unmodified polyamide resin (D) and a modified polyamide resin (E). In the resin fuel-supply component, the proportion of the modified polyamide resin (E) is not greater than 8 wt% based on the total weight of the higher-acid-modification-ratio high-density polyethylene resin (A), the lower-acid-modification-ratio high-density polyethylene resin (B), the unmodified high-density polyethylene resin (C), the unmodified polyamide resin (D) and the modified polyamide resin (E).

## Description

### BACKGROUND OF THE INVENTION

### 1. Field of the Invention

The present invention relates to a resin fuel-supply component to be used as a weld joint or the like which is connected to a resin fuel tank.

### 2. Description of the Related Art

Resin fuel tanks for motor vehicles generally have a multilayer structure including a lower fuel permeability layer composed of a lower fuel permeability material such as an ethylene-vinyl alcohol copolymer (EVOH) for prevention of evaporative fuel emission. The outermost layer of the multilayer structure is typically formed of a high density polyethylene (HDPE) for impact resistance, chemical resistance, water resistance and the like and for economy.

On the other hand, it is a recent practice to use a resin joint as a weld joint to be welded to a rim of an opening of such a resin fuel tank. The resin weld joint is typically welded to the resin fuel tank by a heat plate welding method. As proposed in JP-A-2001-302910, for example, an alloy material including a sea phase of a polyolefin resin and an island phase of a polyamide resin dispersed in the sea phase is used as a material for the resin weld joint to be welded to the resin fuel tank, and the polyolefin resin sea phase of the alloy material is melt-bonded to the outermost HDPE layer of the resin fuel tank. However, the alloy material is insufficient in sea-island interface compatibility, so that the island phase and the sea phase are liable to be separated from each other at the interface therebetween due to a difference in expansion coefficient therebetween when the alloy material is immersed in a fuel. As a result, the fuel is likely to intrude into a space formed by the separation, so that the fuel permeability of the alloy material is increased. Further, the resin weld joint formed of the alloy material disadvantageously has poor weldability to the resin fuel tank.

To solve the problems associated with the fuel permeability and the weldability to the resin fuel tank, the inventor of the present invention proposed, in a previously filed patent application (Japanese Patent Application No. 2008-220001), a resin weld joint formed of an alloy material which includes a sea phase containing a higher-acid-modification-ratio high-density polyethylene, a lower-acid-modification-ratio high-density polyethylene and an unmodified high-density polyethylene, and an island phase containing a polyamide resin and dispersed in the sea phase.

The resin weld joint proposed in Japanese Patent Application No. 2008-220001 includes a sea-island compatibilizing layer present between the sea phase and the island phase and, therefore, is more excellent than the resin weld joint formed of the alloy material disclosed in JP-A-2001-302910 because of its lower fuel permeability and more excellent weldability to the resin fuel tank. As a result of continued studies on the alloy material for the resin weld joint, the inventor of the present invention found that there is room for improvement in the weldability between the resin weld joint and the resin fuel tank.

In view of the foregoing, it is an object of the present invention to provide a resin fuel-supply component having lower fuel permeability and excellent weldability to the resin fuel tank.

### SUMMARY OF THE INVENTION

According to the present invention, there is provided a resin fuel-supply component composed of an alloy material which comprises a sea phase, an island phase dispersed in the sea phase and a sea-island compatibilizing layer present between the sea phase and the island phase, the sea phase comprising a higher-acid-modification-ratio high-density polyethylene resin (A), a lower-acid-modification-ratio high-density polyethylene resin (B) and an unmodified high-density polyethylene resin (C), the island phase comprising an unmodified polyamide resin (D) and a modified polyamide resin (E). In the resin fuel-supply component, the proportion of the modified polyamide resin (E) is not greater than 8 wt% based on the total weight of the higher-acid-modification-ratio high-density polyethylene resin (A), the lower-acid-modification-ratio high-density polyethylene resin (B), the unmodified high-density polyethylene resin (C), the unmodified polyamide resin (D) and the modified polyamide resin (E).

The inventors of the present invention further conducted intensive studies on the alloy material for the resin weld joint proposed in Japanese Patent Application No. 2008-220001. As a result, the inventors found that the polyamide resin island phase of the alloy material concentrates on a welding interface between the resin weld joint and the resin fuel tank, and this is associated with the problem of the weldability. Then, the inventors conducted experiments for further improvement of the weldability without any increase in the fuel permeability of the alloy material. In the course of the experiments, the inventors came up with an idea that the concentration of the polyamide resin on the welding interface could be alleviated by employing a modified polyamide resin in combination with an unmodified polyamide resin for the island phase of the alloy material. Based on this idea, the inventors further conducted experiments on the proportion of the modified polyamide resin to be blended. As a result, the inventors found that, where the proportion of the modified polyamide resin is not greater than 8 wt% based on the overall weight of the alloy material, the weldability of the resin weld joint to the resin fuel tank is improved without any increase in the fuel permeability, and the resin weld joint has lower fuel permeability comparable to that of the resin weld joint proposed in Japanese Patent Application No. 2008-220001, and attained the present invention.

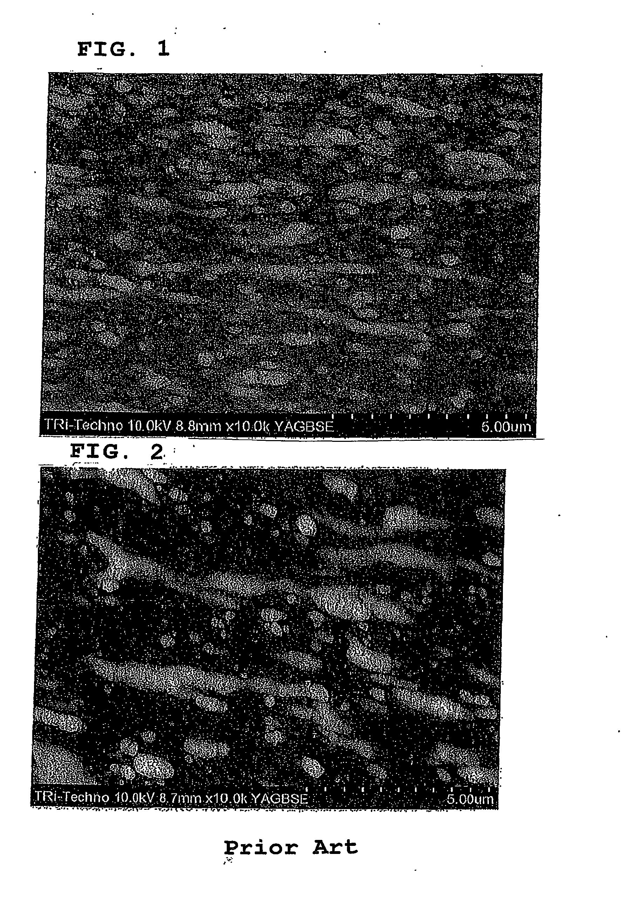

A reason for the improvement of the weldability is not known, but is supposedly as follows. As shown in a scanning electron micrograph (SEM) of FIG. 1, the alloy material for the inventive resin fuel-supply component has compatibilizing layers (white blurry portions present around portions of the island phase) present in interfaces between the sea phase (black portions) and the island phase (white portions). The inventors studied and analyzed the compatibilizing layers, and supposed that the higher-acid-modification-ratio high-density polyethylene resin (A) in the sea phase is linearly bonded to the unmodified polyamide resin (D) and the modified polyamide resin (E) in the island phase and the resulting resin serves as a compatibilizing agent for stabilization of the sea-island interfaces. In the compatibilizing layers, the lower-acid-modification-ratio high-density polyethylene resin (B) in the sea phase is supposedly graft-bonded to the unmodified polyamide resin (D) and the modified polyamide resin (E) in the island phase, and the resulting resin serves as a compatibilizing agent for adhesion to the unmodified polyamide resin (D) and the modified polyamide resin (E). Further, the unmodified high-density polyethylene resin (C) in the sea phase serves for the tensile strength of the sea-island structure. Thus, the island phase containing the unmodified polyamide resin (D) and the modified polyamide resin (E) is homogeneously dispersed in the sea phase of the alloy material shown in FIG. 1, so that the concentration of the island phase on the welding interface can be suppressed. This supposedly improves the weldability. Further, the compatibilizing layers supposedly enhance the compatibilization in the sea-island interface. The alloy material shown in FIG. 1 is free from the separation at the sea-island interface which may otherwise occur in the prior-art resin alloy material when it is expanded due to immersion in a fuel. The sea-island interface does not form a fuel penetration path (through which the fuel leaks), thereby lowering the fuel permeability.

As shown in a scanning electron micrograph of FIG. 2, the prior-art resin alloy material (including a sea phase containing the unmodified high-density polyethylene resin (C) alone, and an island phase containing the unmodified polyamide resin (D) and dispersed in the sea phase) has virtually no compatibilizing layer in an interface between the sea phase (a black portion) and the island phase (white portions). A comparison between the alloy material of FIG. 1 and the alloy material of FIG. 2 indicates that the prior-art alloy material shown in FIG. 2 has higher island phase dispersibility. This indicates that the formation of the compatibilizing layers in the sea-island interfaces is more important and more effective for the lowering of the fuel permeability than the island phase dispersibility.

The inventive resin fuel-supply component is composed of the alloy material having the island phase containing not only the unmodified polyamide resin (D) but also the modified polyamide resin (E), and the proportion of the modified polyamide resin (E) is not greater than 8 wt% based on the total weight of the components (A) to (E). This suppresses the concentration of the island phase on the welding interface between the resin fuel tank and the resin weld joint, and lowers the fuel permeability. The alloy material is free from the sea-island separation, even if a shearing force acts on the alloy material in a molding process. Therefore, the alloy material can be molded into a component having a smaller curvature radius with excellent moldability. The inventive resin fuel-supply component formed of the aforementioned alloy material can be used as a resin fuel-supply component having a limited curvature radius for a compact car.

Where the modified polyamide resin (E) is a terminal amine-modified polyamide resin, the adhesive strength at the sea-island interface is further improved.

Where the proportion of the unmodified polyamide resin (D) is 27 to 35 wt% based on the total weight of the components (A) to (E), the fuel permeability is further lowered.

The proportion of the higher-acid-modification-ratio high-density polyethylene resin (A) may be 2 to 19 wt% based on the total weight of the components (A) to (E), and the proportion of the lower-acid-modification-ratio high-density polyethylene resin (B) may be 20 to 35 wt% based on the total weight of the components (A) to (E). Further, the proportion of the unmodified high-density polyethylene resin (C) may be 30 to 50 wt% based on the total weight of the components (A) to (E). In this case, the fuel permeability is further lowered.

Where the higher-acid-modification-ratio high-density polyethylene resin (A) has an acid modification ratio of not less than 2.0 wt% and the lower-acid-modification-ratio high-density polyethylene resin (B) has an acid modification ratio of not less than 0.5 wt% and less than 2.0 wt%, the fuel permeability is significantly lowered.

Where the compatibilizing layer has a thickness of 80 to 350 nm, the separation at the sea-island interface is suppressed, and the fuel permeability is further lowered.

Where the inventive resin fuel-supply component is a component having a weld joint part (for example, a resin weld joint, a resin weld joint/filler hose unitary component including a weld joint part and a filler hose part unitarily formed, or a resin filler pipe module including a weld joint part, a filler hose part and a filler pipe part unitarily formed), the resin fuel-supply component is excellent in weldability to a resin fuel tank. Where the inventive resin fuel-supply component is a resin filler hose or a resin filler pipe, the resin filler hose and the resin filler pipe can be welded (connected) to each other with excellent weldability (connectability).

### BRIEF DESCRIPTION OF THE DRAWINGS

FIG. 1 is a scanning electron micrograph (SEM) of an alloy material for an inventive resin fuel-supply component (taken at a magnification of X 10000).
FIG. 2 is a scanning electron micrograph (SEM) of a prior-art alloy material (taken at a magnification of X 10000).
FIG. 3 is a sectional view schematically illustrating a resin weld joint (an example of the inventive resin fuel-supply component) welded to a resin fuel tank.
FIG. 4 is a sectional view schematically illustrating a resin weld joint/filler hose unitary component (another example of the inventive resin fuel-supply component) welded to a resin fuel tank.
FIG. 5 is a sectional view schematically illustrating a resin filler pipe module (further another example of the inventive resin fuel-supply component) welded to a resin fuel tank.
FIG. 6 is a diagram for explaining connection between a resin filler hose (still another example of the inventive resin fuel-supply component) and a weld joint welded to a resin fuel tank.
FIG. 7 is a sectional view of a test piece formed from pellets (alloy material) of any of inventive examples and comparative examples.
FIG. 8 is a sectional view illustrating a test device used for measuring the fuel permeation amount of the test piece formed from the pellets (alloy material) of any of the inventive examples and the comparative examples.

### DETAILED DESCRIPTION OF PREFERRED EMBODIMENTS

The present invention will hereinafter be described by way of embodiments thereof.

The inventive resin fuel-supply component is composed of an alloy material which has a sea phase containing the following components (A) to (C), an island phase containing the following components (D) and (E) and dispersed in the sea phase, and a sea-island compatibilizing layer present between the sea phase and the island phase:
(A) a higher-acid-modification-ratio high-density polyethylene resin (higher-acid-modification-ratio HDPE);
(B) a lower-acid-modification-ratio high-density polyethylene resin (lower-acid-modification-ratio HDPE);
(C) an unmodified high-density polyethylene resin (unmodified HDPE);
(D) an unmodified polyamide resin; and
(E) a modified polyamide resin. A most notable feature of the present invention is that the island phase contains not only the unmodified polyamide resin (D) but also the modified polyamide resin (E), and the proportion of the modified polyamide resin (E) is not greater than 8 wt% based on the total weight of the components (A) to (E).

The higher-acid-modification-ratio HDPE (A) and the lower-acid-modification-ratio HDPE (B) are HDPEs each modified with an acid such as an unsaturated carboxylic acid derivative, and the unmodified HDPE (C) is an HDPE that is not modified. The higher-acid-modification-ratio HDPE (A) is prepared by modification with a greater amount of the acid (or contains a greater amount of an acid component) than the lower-acid-modification-ratio HDPE (B). The modified polyamide resin (E) is a polyamide resin modified with an amine at its terminal, and the unmodified polyamide resin (D) is a polyamide resin that is not modified.

In the alloy material, the higher-acid-modification-ratio HDPE (A) is preferably present in a proportion of 2 to 19 wt%, particularly preferably 3 to 8 wt%, based on the total weight of the components (A) to (E) for lower fuel permeability and excellent weldability to a fuel tank. In the alloy material, the lower-acid-modification-ratio HDPE (B) is preferably present in a proportion of 20 to 35 wt%, particularly preferably 25 to 30 wt%, based on the total weight of the components (A) to (E) for lower fuel permeability and excellent weldability to the fuel tank. In the alloy material, the unmodified HDPE (C) is preferably present in a proportion of 30 to 50 wt%, particularly preferably 35 to 45 wt%, based on the total weight of the components (A) to (E) for lower fuel permeability and excellent weldability to the fuel tank.

The higher-acid-modification-ratio HDPE (A), the lower-acid-modification-ratio HDPE (B) and the unmodified HDPE (C) each have a higher density than an ordinary polyethylene (PE). The higher-acid-modification-ratio HDPE (A), the lower-acid-modification-ratio HDPE (B) and the unmodified HDPE (C) each typically have a specific gravity of 0.93 to 0.97, preferably 0.93 to 0.96, and a melting point of 120°C to 145°C. The specific gravity is determined in conformity with ISO 1183, and the melting point is determined in conformity with ISO 3146.

The acid modification ratio of the higher-acid-modification-ratio HDPE (A) is preferably not lower than 2.0 wt%, particularly preferably 2.0 to 2.5 wt%. The acid modification ratio of the lower-acid-modification-ratio HDPE (B) is preferably not lower than 0.5 wt% and less than 2.0 wt%, particularly preferably 0.5 to 1.0 wt%. Examples of the acid include unsaturated carboxylic acids and unsaturated carboxylic acid derivatives, which may be used either alone or in combination.

The higher-acid-modification-ratio HDPE (A) and the lower-acid-modification-ratio HDPE (B) may be prepared, for example, by graft-modifying a HDPE with a modification compound (an unsaturated carboxylic acid or an unsaturated carboxylic acid derivative) in the presence of a radical initiator. The higher-acid-modification-ratio HDPE (A) and the lower-acid-modification-ratio HDPE (B) prepared through the modification are preferably modified HDPEs each having one of functional groups such as a maleic anhydride residue, a maleic acid group, an acrylic acid group, a methacrylic acid group, an acrylate group, a methacrylate group and a vinyl acetate group, or two or more of these functional groups.

The higher-acid-modification-ratio HDPE (A) typically has a weight average molecular weight (Mw) of about 18000, and the lower-acid-modification-ratio HDPE (B) and the unmodified HDPE (C) each typically have a weight average molecular weight (Mw) of about 250000.

Examples of the unmodified polyamide resin (D) for the island phase include a polyamide-6 (PA6), a polyamide-66 (PA66), a polyamide-99 (PA99), a polyamide-1010 (PA1010), a polyamide-610 (PA610), a polyamide-612 (PA612), a polyamide-11 (PA11), a polyamide-912 (PA912), a polyamide-12 (PA12), a copolymer of a polyamide-6 and a polyamide-66 (PA6/66), and a copolymer of a polyamide-6 and a polyamide-12 (PA6/12), which may be used either alone or in combination. Among these polyamide resins, the polyamide-6 (PA6) is preferred for lower fuel permeability and lower material costs.

In the alloy material, the unmodified polyamide resin (D) is preferably present in a proportion of 27 to 35 wt%, particularly preferably 30 to 34 wt%, based on the total weight of the components (A) to (E). If the proportion of the unmodified polyamide resin (D) is too low, the proportions of the HDPEs (A) to (C) are relatively increased, resulting in higher fuel permeability. On the other hand, if the proportion of the unmodified polyamide resin (D) is too high, the weldability between the weld joint and the fuel tank tends to be impaired.

An example of the modified polyamide resin (E) to be used in combination with the unmodified polyamide resin (D) is a terminal amine-modified polyamide resin, which is prepared by amine-modifying a polyamide-6 (PA6) described as an example of the unmodified polyamide resin (D) at its terminal. The terminal amine-modified polyamide resin is preferred for proper reaction with the higher-acid-modification-ratio HDPE (A) and the lower-acid-modification-ratio HDPE (B).

In the alloy material, the modified polyamide resin (E) is present in a proportion of not greater than 8 wt%, preferably 2 to 8 wt%, based on the total weight of the components (A) to (E). If the proportion of the modified polyamide resin (E) is too high, the fuel permeability is increased. In consideration of a yield stress (MPa) after immersion in the fuel, the proportion of the modified polyamide resin (E) is preferably not less than 2 wt%. Particularly, where the proportion of the modified polyamide resin (E) is 2 to 8 wt%, the fuel permeability and the yield stress after the immersion in the fuel are well balanced.

The alloy material for the inventive resin fuel-supply component is prepared by blending the higher-acid-modification-ratio HDPE (A), the lower-acid-modification-ratio HDPE (B), the unmodified HDPE (C), the unmodified polyamide resin (D) and the modified polyamide resin (E) in the predetermined proportions described above, and kneading the resulting mixture, for example, at a temperature of 220°C to 260°C under higher shear conditions by means of a twin screw extruder (kneader).

In addition to the components (A) to (E), as required, a nucleus increasing agent (in a proportion of about 0.3 to about 0.5 wt% based on the overall weight of the alloy material), a flame retardant, an antioxidant, a lubricant, a blocking agent and the like may be added to the alloy material.

Examples of the inventive resin fuel-supply component include a resin weld joint to be welded to a resin fuel tank, a resin filler hose to be attached to the resin weld joint, a resin filler pipe to be connected to the resin filler hose, a resin weld joint/filler hose unitary component including a weld joint part and a filler hose part unitarily formed, a resin filler pipe module including a filler pipe part and a filler hose part unitarily formed, and a resin filler pipe module including a weld joint part, a filler hose part and a filler pipe part unitarily formed.

In the alloy material for the resin fuel-supply component, the island phase (domains) containing the unmodified polyamide resin (D) and the modified polyamide resin (E) is finely dispersed in the sea phase (matrix) containing the higher-acid-modification-ratio HDPE (A), the lower-acid-modification-ratio HDPE (B) and the unmodified HDPE (C), and the sea-island compatibilizing layer is present between the sea phase and the island phase. The island phase typically has dispersion diameters of 0.5 to 10 µm, so that the alloy material has a fine sea-island structure. The sea-island structure can be observed by means of a scanning electron microscope (SEM).

The compatibilizing layer present between the sea phase and the island phase in the alloy material preferably has a thickness of 80 to 350 nm, particularly preferably 100 to 300 nm. The thickness of the compatibilizing layer is measured by means of the scanning electron microscope (SEM). Where the alloy material does not contain the higher-acid-modification-ratio HDPE (A), the compatibilizing layer in the alloy material has a thickness of less than 80 nm. Therefore, whether the higher-acid-modification-ratio HDPE (A) is present or not can be determined by measuring the thickness of the compatibilizing layer.

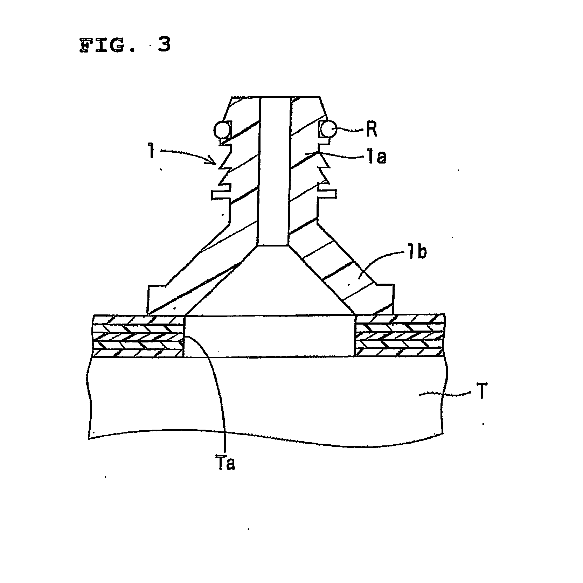

FIG. 3 schematically illustrates a resin weld joint 1 (an example of the inventive resin fuel-supply component) welded to a resin fuel tank T. The resin weld joint 1 has a generally hollow cylindrical shape, and includes an upper half portion 1a having a constant inner diameter and serving as a hose fitting portion, and a lower half portion 1b flared downward as having outer and inner diameters progressively increasing downward. The resin weld joint 1 is welded to a rim of an opening Ta of the resin fuel tank T at one of opposite ends thereof. A resin filler hose (not shown) is connected to the other end of the resin weld joint 1. In FIG. 3, a reference character R is an O-ring.

In the present invention, the resin weld joint 1 is composed of the specific alloy material described above. The resin weld joint 1 is produced, for example, by a melt extrusion method, a melt injection molding method or the like by employing the alloy material prepared in the aforesaid manner (typically in a pellet form). The molding/forming temperature is typically 220°C to 260°C.

The alloy material for the resin weld joint 1 preferably has a melting point of 220°C to 260°C (which is closer to the melting point of the outermost layer (HDPE layer) of the resin fuel tank T) for easier welding of the resin weld joint 1 to the resin fuel tank T.

Exemplary methods for bonding (welding) the resin weld joint 1 to the resin fuel tank T include a heat plate welding method, a vibration welding method, an ultrasonic welding method, a laser welding method and the like, which are preferred for higher welding strength. Alternatively, the bonding of the resin weld joint 1 may be achieved by a hot gas welding method or a rotary welding method.

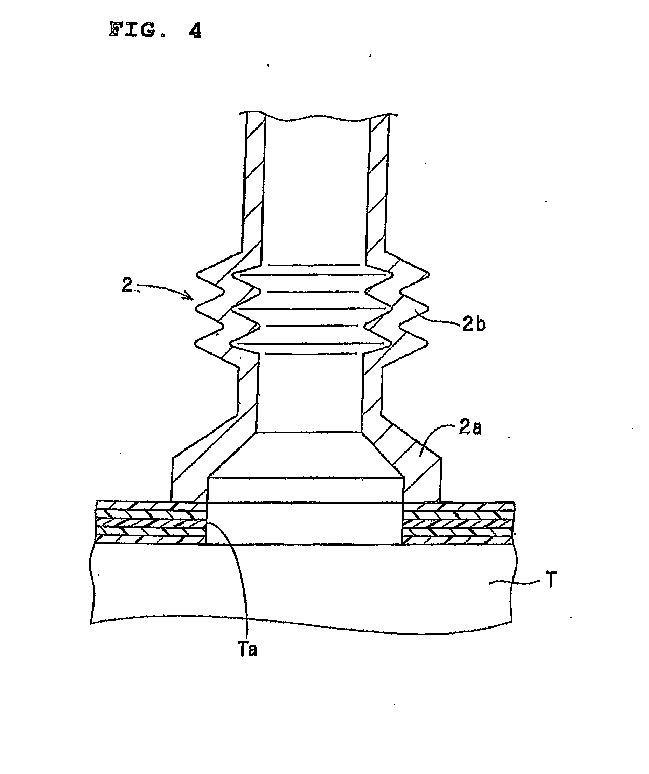

FIG. 4 schematically illustrates a resin weld joint/filler hose unitary component 2 (another example of the inventive resin fuel-supply component) welded to a resin fuel tank T. The resin weld joint/filler hose unitary component 2 includes a weld joint part 2a and a filler hose part 2b which are unitarily formed. The resin weld joint/filler hose unitary component 2 includes one end open portion (lower end open portion) which is flared and has a greater wall thickness. The one end open portion is welded to a rim of an opening Ta of the resin fuel tank T. The filler hose part 2b has a bellows-like intermediate portion. Alternatively, the filler hose part 2b may have a straight intermediate portion.

In the present invention, the resin weld joint/filler hose unitary component 2 is entirely composed of the specific alloy material described above. The resin weld joint/filler hose unitary component 2 is produced, for example, by a melt extrusion method, a melt injection molding method, a blow molding method or the like by employing the alloy material prepared in the aforesaid manner (typically in a pellet form). The molding/forming temperature is typically 220°C to 260°C.

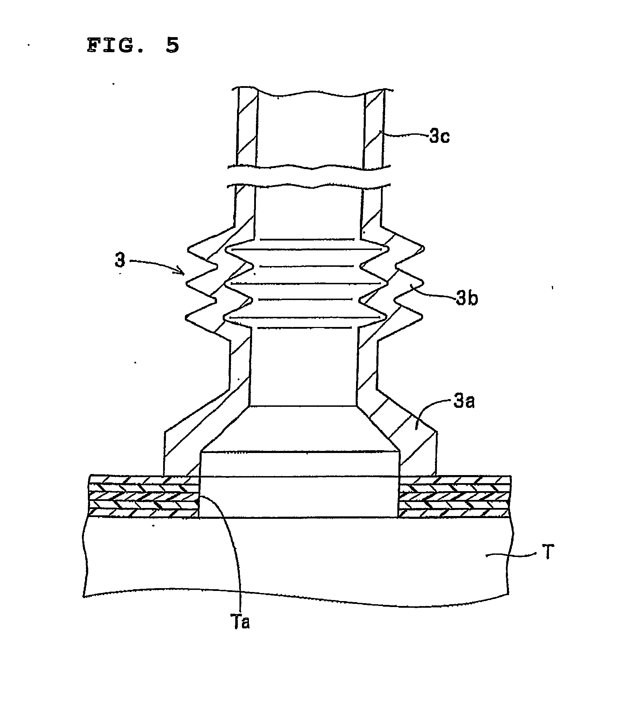

FIG. 5 schematically illustrates a resin filler pipe module 3 (further another example of the inventive resin fuel-supply component) welded to a resin fuel tank T. The resin filler pipe module 3 includes a weld joint part 3a, a filler hose part 3b and a filler pipe part 3c which are unitarily formed. As shown in FIG. 5, the weld joint part 3a is welded to a rim of an opening Ta of the resin fuel tank T.

In the present invention, the resin filler pipe module 3 is entirely composed of the specific alloy material described above. The resin filler pipe module 3 is produced, for example, by a melt extrusion method, a melt injection molding method, a blow molding method or the like by employing the alloy material prepared in the aforesaid manner (typically in a pellet form). The molding/forming temperature is typically 220°C to 260°C.

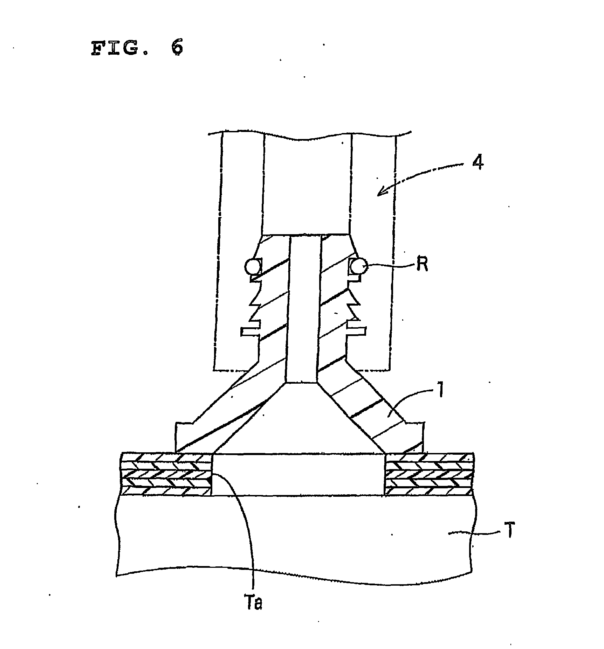

FIG. 6 schematically illustrates connection of a resin filler hose 4 (still another example of the inventive resin fuel-supply component) to a weld joint 1 welded to a resin fuel tank T. As shown in FIG. 6, the resin filler hose 4 is attached to the weld joint 1 welded to a rim of an opening Ta of the resin fuel tank T. In FIG. 6, a reference character R denotes an O-ring.

In the present invention, the resin filler hose 4 is entirely composed of the specific alloy material described above. The resin filler hose 4 is produced, for example, by a melt extrusion method, a melt injection molding method, a blow molding method or the like by employing the alloy material prepared in the aforesaid manner (typically in a pellet form). The molding/forming temperature is typically 220°C to 260°C.

A resin filler pipe module (further another example of the inventive resin fuel-supply component) including a filler pipe part and a filler hose part unitarily formed is also attached to a weld joint 1 welded to a rim of an opening Ta of a resin fuel tank T in the same manner as in FIG. 6.

The resin filler pipe module is produced in substantially the same manner as the resin filler hose 4 by a melt extrusion method, a melt injection molding method, a blow molding method or the like by employing the specific alloy material described above.

### EXAMPLES

Examples of the present invention will hereinafter be described in conjunction with comparative examples. The present invention is not limited to these inventive examples.

Prior to description of the inventive examples and the comparative examples, ingredients of the following alloy materials will be described.

### Higher-Acid-Modification-Ratio HDPE (A)

An HDPE having an acid modification ratio of 2.5 wt% and an Mw of 18000 (available under the trade name of U-MEX 2000 from Sanyo Chemical Industries Ltd.)

### Lower-Acid-Modification-Ratio HDPE (B)

An HDPE having an acid modification ratio of 0.5 wt% and an Mw of about 250000 (available under the trade name of ADTEX DH0200 from Japan Polyethylene Corporation)

### Unmodified HDPE (C)

An unmodified HDPE having an Mw of 250000 (available under the trade name of HB111R from Japan Polyethylene Corporation)

### Unmodified Polyamide Resin (D)

A PA6 having an Mw of 13000 (available under the trade name of UBE NYLON 1013B from Ube Industries, Ltd.)

### Modified Polyamide Resin (E)

A terminal amine-modified polyamide resin having an Mw of 13000 (available under the trade name of UBE NYLON 1013A from Ube Industries, Ltd.)

With the use of the ingredients described above, the alloy materials were each prepared in a pellet form in the following manner.

### Pellet Materials I to V (for Inventive Examples) and Pellet Materials VI and VII (for Comparative Examples)

Pellet alloy materials were each prepared by blending the ingredients in proportions as shown in Tables 1-1 and 1-2 and kneading the resulting mixture at a resin temperature of 270°C by means of a twin screw kneading extruder (TEX30α available from Japan Steel Works, Ltd.) The island-in-sea dispersion state of each of the pellet materials was observed by means of a scanning electron microscope (S4800 available from Hitachi High-Technologies Corporation), and the thickness of a sea-island compatibilizing layer was measured. The results are shown in Tables 1-1 and 1-2.

**Table 1-1 (wt%)**

| | Pellet materials (for inventive examples) | | | | |
|---|---|---|---|---|---|
| | I | II | III | IV | V |
| Unmodified PA6 (D) | 34.0 | 33.0 | 30.0 | 27.0 | 35.0 |
| Modified PA6 (E) | 1.0 | 2.0 | 5.0 | 8.0 | 0.5 |
| Lower-acid-modification-ratio HDPE (B) | 23.7 | 23.7 | 23.7 | 23.7 | 23.7 |
| Higher-acid-modification-ratio HDPE (A) | 5.0 | 5.0 | 5.0 | 5.0 | 5.0 |
| Unmodified HDPE (C) | 36.3 | 36.3 | 36.3 | 36.3 | 35.8 |
| Dispersion state | | | | | |
| Sea phase | HDPEs | | | | |
| Island phase | Unmodified PA6 + Modified PA6 | | | | |
| Thickness of compatibilizing layer (nm) | 200 | 180 | 150 | 140 | 200 |
| Fuel permeability (mg · mm/cm²/day) | 1.2 | 1.3 | 4.5 | 7.0 | 7.0 |

**Table 1-2 (wt%)**

| | Pellet materials (for comparative examples) | |
|---|---|---|
| | VI | VII |
| Unmodified PA6 (D) | 35.0 | 25.0 |
| Modified PA6 (E) | - | 10.0 |
| Lower-acid-modification-ratio HDPE (B) | 27.7 | 23.7 |
| Higher-acid-modification-ratio HDPE (A) | 1.0 | 5.0 |
| Unmodified HDPE (C) | 36.3 | 36.3 |
| Dispersion state | | |
| Sea phase | HDPEs | |
| Island phase Island phase | Unmodified PA6 | Unmodified PA6 + Modified PA6 |
| Thickness of compatibilizing layer (nm) | 70 | 100 |
| Fuel permeability (mg · mm/cm²/day) | 1.2 | 8.0 |

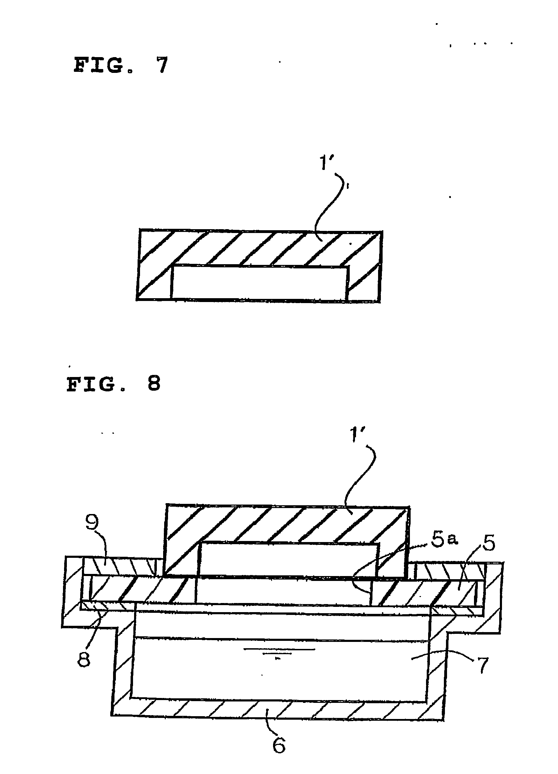

A closed-top hollow-cylindrical test piece 1' having a height of 10 mm, an inner diameter of 70 mm, and a top and peripheral wall thickness of 4 mm as shown in FIG. 7 was prepared by melt-injecting each of the pellet materials in a mold at a molding temperature of 260°C.

The test piece thus prepared was evaluated for fuel permeability based on the following criteria. The results are shown in Tables 1-1 and 1-2.

### Fuel Permeation Amount

A sheet material (having a thickness of 10 mm) having a five layer structure of HDPE/modified HDPE/EVOH/modified HDPE/HDPE was prepared as corresponding to a component of a resin fuel tank, and an opening having the same diameter as the inner diameter of a lower end opening of the test piece was formed in the sheet material. With the lower end opening of the test piece being positioned with respect to the opening of the sheet material, the test piece was welded to one surface of the sheet material (a surface of the HDPE outermost layer) at 260°C for 20 seconds by a heat plate welding method, whereby a sample was produced. Then, as shown in FIG. 8, a cup-like container 6 was prepared, and a fuel mixture (FC/E10) 7 prepared by mixing Fuel C (containing toluene and isooctane in a volume ratio of 50:50) and ethanol in a volume ratio of 90:10 was put in the container 6. In FIG. 8, reference characters 1', 5 and 5a respectively denote the test piece, the sheet material and the opening of the sheet material. The container 6 had a stepped upper open end portion having a greater diameter, and the upper open end portion had a female thread (not shown) provided in an inner peripheral surface thereof. Then, the sample described above was fitted in the stepped portion of the container 6 via a seal rubber ring 8, and a ring-shaped threaded lid 9 was threadingly engaged with the upper open end portion to tightly press the sheet material 5 of the sample to seal the container 6. Thus, a test device was produced for measurement of a fuel permeation amount. The test device was vertically inverted and, in this state, the weight of the test device was measured in an atmosphere maintained at 40°C once a day for one month. Then, daily weight changes were calculated, and a daily weight change observed when being stabilized was employed as a fuel permeation amount. In the present invention, the fuel permeation amount (mg•mm/cm²/day) was required to be not greater than 7.0.

As apparent from the results shown in Tables 1-1 and 1-2, the pellet materials I to V for the inventive examples each had lower fuel permeability with a smaller fuel permeation amount. On the other hand, the pellet material VII for the comparative examples, which contained the modified PA in an excessively great amount, had higher fuel permeability with poorer island dispersibility. The pellet material VI for the comparative examples had a smaller fuel permeation amount, but led to poorer weldability to a tank, a filler pipe and a filler hose as will be described below because the pellet material VI did not contain the modified PA (E).

The inventor of the present invention experimentally confirmed that the pellet materials II to IV each containing the modified polyamide resin (E) in a proportion of 2 to 8 wt% for the inventive examples each had an improved yield stress (MPa) after immersion in the fuel, and the yield stress and the fuel permeability were well balanced.

Next, resin weld joints were produced in the following manner by employing the aforementioned pellet materials.

### Examples 1 to 5 and Comparative Examples 1 and 2

As shown in Tables 2-1 and 2-2, resin weld joints were produced by melt-injecting each of the pellet materials in a mold at a molding temperature of 260°C.

**Table 2-1**

| | Example | | | | |
|---|---|---|---|---|---|
| | 1 | 2 | 3 | 4 | 5 |
| Pellet material | I | II | III | IV | V |
| Weldability to tank | ○ | ○ | ○ | ○ | ○ |

**Table 2-2**

| | Comparative Example | |
|---|---|---|
| | 1 | 2 |
| Pellet material | VI | VII* |
| Weldability to tank | × | ○ |

| | | |
|---|---|---|
| * The fuel permeability was higher. | | |

The resin weld joints of Examples 1 to 5 and Comparative Examples 1 and 2 thus produced were evaluated for weldability to a tank based on the following criteria. The results are shown in Tables 2-1 and 2-2.

### Weldability to Tank

The resin weld joints were each welded to a resin fuel tank (having a five layer structure of HDPE/modified HDPE/EVOH/modified HDPE/HDPE) at a welding temperature of 260°C for 20 seconds. Thereafter, the resin weld joints were each evaluated for weldability to the resin fuel tank. For the weldability evaluation, a test piece was prepared by cutting a part of a weld portion, and subjected to a tensile test. A test piece broken at a portion other than the weld portion due to necking was rated as acceptable (○), and a test piece broken due to separation at a welding interface was rated as unacceptable (×).

As apparent from the results shown in Tables 2-1 and 2-2, the resin weld joints of Examples 1 to 5 were more excellent in weldability to the tank than the resin weld joints of Comparative Examples 1 and 2.

The inventor of the present invention produced resin weld joint/filler hose unitary components each including a weld joint part and a filler hose part unitarily formed by employing the pellet materials for the inventive examples, and experimentally confirmed that, like the resin weld joints of the inventive examples described above, the resin weld joint/filler hose unitary components were each excellent in weldability between the weld joint part and the tank. Further, the inventor produced resin filler pipe modules each including a weld joint part, a filler hose part and a filler pipe part integrally formed by employing the pellet materials for the inventive examples, and experimentally confirmed that, like the resin weld joints of the inventive examples described above, the resin filler pipe modules were each excellent in weldability between the weld joint part and the tank.

Next, resin filler hoses were produced in the following manner by employing the aforementioned pellet materials.

### Examples 6 to 10 and Comparative Examples 3 and 4

As shown in Tables 3-1 and 3-2, resin filler hoses each having an inner diameter of 20 mm, a thickness of 2 mm and a length of 0.5 m were produced by blow-molding the pellet materials by means of a blow molding machine at a molding temperature of 260°C.

**Table 3-1**

| | Example | | | | |
|---|---|---|---|---|---|
| | 6 | 7 | 8 | 9 | 10 |
| Pellet material | I | II | III | IV | V |
| Weldability to filler pipe | ○ | ○ | ○ | ○ | ○ |

**Table 3-2**

| | Comparative Example | |
|---|---|---|
| | 3 | 4 |
| Pellet material | VI | VII* |
| Weldability to filler pipe | × | ○ |

| | | |
|---|---|---|
| * The fuel permeability was higher. | | |

The resin filler hoses of Examples 6 to 10 and Comparative Examples 3 and 4 thus produced were each evaluated for weldability to a filler pipe based on the following criteria. The results are shown in Tables 3-1 and 3-2. Weldability to Filler Pipe

A resin filler pipe having an inner diameter of 20 mm, a thickness of 2 mm and a length of 0.5 m was produced by blow-molding the pellet material III shown in Table 1-1 at a molding temperature of 260°C by means of a blow molding machine. In turn, the resin filler pipe thus produced was fitted around a mandrel. The resin filler hoses previously produced were each fitted around the resin filler pipe. Then, the resin filler hose was welded to the resin filler pipe at a weld portion at a welding temperature of 260°C for 20 seconds. For weldability evaluation, a test piece was prepared by cutting a part of the weld portion, and subjected to a tensile test. A test piece broken at a portion other than the weld portion due to necking was rated as acceptable (○), and a test piece broken due to separation at a welding interface was rated as unacceptable (×).

As apparent from the results shown in Tables 3-1 and 3-2, the resin filler hoses of Examples 6 to 10 were more excellent in weldability to the filler pipe than the resin filler hoses of Comparative Examples 3 and 4.

The inventor of the present invention produced resin weld joint/filler hose unitary components each including a weld joint part and a filler hose part unitarily formed by employing the pellet materials for the inventive examples, and experimentally confirmed that, like the resin filler hoses of the inventive examples described above, the resin weld joint/filler hose unitary components were each excellent in weldability between the filler hose part and the filler pipe.

Next, resin filler pipes were produced in the following manner by employing the aforementioned pellet materials.

### Examples 11 to 15 and Comparative Examples 5 and 6

As shown in Tables 4-1 and 4-2, resin filler pipes each having an inner diameter of 25 mm, a thickness of 2 mm and a length of 0.5 m were produced by blow-molding the pellet materials at a molding temperature of 260°C by means of a blow molding machine.

**Table 4-1**

| | Example | | | | |
|---|---|---|---|---|---|
| | 11 | 12 | 13 | 14 | 15 |
| Pellet material | I | II | III | IV | V |
| Weldability to filler hose | ○ | ○ | ○ | ○ | ○ |

**Table 4-2**

| | Comparative Example | |
|---|---|---|
| | 5 | 6 |
| Pellet material | VI | VII* |
| Weldability to filler hose | × | ○ |

| | | |
|---|---|---|
| * The fuel permeability was higher. | | |

The resin filler pipes of Examples 11 to 15 and Comparative Examples 5 and 6 thus produced were each evaluated for weldability to a filler hose based on the following criteria. The results are shown in Tables 4-1 and 4-2.

### Weldability to Filler Hose

A resin filler hose having an inner diameter of 25 mm, a thickness of 2 mm and a length of 0.25 m was produced by extruding the pellet material III shown in Table 1-1 at an extrusion temperature of 260°C. In turn, the resin filler pipes previously produced were each fitted around a mandrel, and the resin filler hose thus produced was fitted around the resin filler pipe. Then, the resin filler hose was welded to the resin filler pipe at a weld portion at a welding temperature of 260°C for 20 seconds. For weldability evaluation, a test piece was prepared by cutting a part of the weld portion, and subjected to a tensile test. A test piece broken at a portion other than the weld portion due to necking was rated as acceptable (○), and a test piece broken due to separation at a welding interface was rated as unacceptable (×).

As apparent from the results shown in Tables 4-1 and 4-2, the resin filler pipes of Examples 11 to 15 were more excellent in weldability to the filler hose than the resin filler pipes of Comparative Examples 5 and 6.

The inventive resin fuel-supply component is usable, for example, as a resin weld joint, a resin filler hose, a resin filler pipe, a resin weld joint/filler hose unitary component including a weld joint part and a filler hose part unitarily formed, a resin filler pipe module including a filler pipe part and a filler hose part unitarily formed, and a resin filler pipe module including a weld joint part, a filler hose part and a filler pipe part.

## Claims

1. A resin fuel-supply component composed of an alloy material which comprises a sea phase, an island phase dispersed in the sea phase and a sea-island compatibilizing layer present between the sea phase and the island phase,
the sea phase comprising a higher-acid-modification-ratio high-density polyethylene resin (A), a lower-acid-modification-ratio high-density polyethylene resin (B), and an unmodified high-density polyethylene resin (C),
the island phase comprising an unmodified polyamide resin (D) and a modified polyamide resin (E),
wherein the modified polyamide resin (E) is present in the alloy material in a proportion of not greater than 8 wt% based on a total weight of the higher-acid-modification-ratio high-density polyethylene resin (A), the lower-acid-modification-ratio high-density polyethylene resin (B), the unmodified high-density polyethylene resin (C), the unmodified polyamide resin (D) and the modified polyamide resin (E).

2. A resin fuel-supply component as set forth in claim 1, wherein the modified polyamide resin (E) is a terminal amine-modified polyamide resin.

3. A resin fuel-supply component as set forth in claim 1 or 2, wherein the unmodified polyamide resin (D) is present in the alloy material in a proportion of 27 to 35 wt% based on the total weight of the components (A) to (E).

4. A resin fuel-supply component as set forth in any one of claims 1 to 3,
wherein the higher-acid-modification-ratio high-density polyethylene resin (A) is present in the alloy material in a proportion of 2 to 19 wt% based on the total weight of the components (A) to (E),
wherein the lower-acid-modification-ratio high-density polyethylene resin (B) is present in the alloy material in a proportion of 20 to 35 wt% based on the total weight of the components (A) to (E),
wherein the unmodified high-density polyethylene resin (C) is present in the alloy material in a proportion of 30 to 50 wt% based on the total weight of the components (A) to (E).

5. A resin fuel-supply component as set forth in any one of claims 1 to 4,
wherein the higher-acid-modification-ratio high-density polyethylene resin (A) has an acid modification ratio of not less than 2.0 wt%,
wherein the lower-acid-modification-ratio high-density polyethylene resin (B) has an acid modification ratio of not less than 0.5 wt% and less than 2.0 wt%.

6. A resin fuel-supply component as set forth in any one of claims 1 to 5, wherein the compatibilizing layer has a thickness of 80 to 350 nm.

7. A resin fuel-supply component as set forth in any one of claims 1 to 6, which is a component selected from the group consisting of a resin weld joint, a resin filler hose, a resin filler pipe, a resin weld joint/filler hose unitary component including a weld joint part and a filler hose part unitarily formed, a resin filler pipe module including a filler pipe part and a filler hose part unitarily formed, and a resin filler pipe module including a weld joint part, a filler hose part and a filler pipe part unitarily formed.
